# EUROPÄISCHE PATENTANMELDUNG

(11) **EP 4 817 874 A1**
(43) Veröffentlichungstag der Anmeldung: **07.10.2026**
(21) Anmeldenummer: 26158019.5
(22) Anmeldetag: 12.02.2026
(51) Int. Cl.: B32B 27/34, F16L 11/04, B32B 1/08, B32B 27/08, B32B 27/18, B60T 17/04

(54) **ROHR FÜR EINE LUFTBREMSLEITUNG**

(30) Priorität: 28.03.2025 DE 102025112248
(71) Anmelder: TI Automotive (Fuldabrück) GmbH, 34277 Fuldabrück (DE)
(72) Erfinder: Arnold, Siegfried, 34128 Kassel (DE)
(74) Vertreter: Andrejewski - Honke Patent- und Rechtsanwälte Partnerschaft mbB

(57) **Zusammenfassung**

Ein Rohr 1 zur Führung von Druckluft umfasst eine Innenschicht 2, eine innere Haftvermittlerschicht 3 und eine Trägerschicht 4. Die innere Haftvermittlerschicht 3 ist zwischen der Trägerschicht 4 und der Innenschicht 2 angeordnet, wobei die Trägerschicht 4 ein PA6 umfasst und die Innenschicht 2 ein Polyamid aufweist. Die innere Haftvermittlerschicht 3 umfasst ein erstes Polyamid und ein zweites Polyamid, wobei das erste Polyamid der inneren Haftvermittlerschicht 3 ein PA12 ist.

## Beschreibung

Die Erfindung betrifft Rohr, insbesondere zur Führung von Druckluft, umfassend eine Innenschicht eine innere Haftvermittlerschicht und eine Trägerschicht, wobei die innere Haftvermittlerschicht zwischen der Trägerschicht und der Innenschicht angeordnet ist, wobei die Trägerschicht ein PA6 umfasst, wobei die Innenschicht ein Polyamid aufweist, wobei die innere Haftvermittlerschicht ein erstes Polyamid aufweist, wobei die innere Haftvermittlerschicht ein zweites Polyamid umfasst. Der Erfindung betrifft außerdem eine Verwendung dieses Rohrs.

Ein derartiges Rohr einer Luftbremsleitung ist aus US 2009/0065085 A1 bekannt und umfasst insgesamt fünf Schichten. Die Innenschicht (0,15mm) weist ein schlagzähmodifiziertes PA12 mit einem Weichmacher auf. Eine daran anschließende innere Haftvermittlerschicht (0,1mm) umfasst ein PA6.12 zu rund 62 Gew.%, ein PA6 zu 16 Gew.% und darüber hinaus einen Weichmacher (BBSA) mit 8 Gew.% sowie einen Schlagzähmodifikator mit 11 Gew.%. Die Haftvermittlerschicht wird von einer relativ dicken Trägerschicht (0,5mm) umschlossen, die zu 87 Gew.% ein PA6 sowie zu 12 Gew.% einen Weichmacher (BBSA) aufweist. Es folgt eine äußere Haftvermittlerschicht (0,1mm) mit einer Zusammensetzung, die identisch zu derjenigen der inneren Haftvermittlerschicht ist. Die Außenschicht (0,15mm) schließlich umfasst eine Zusammensetzung, die identisch zu derjenigen der Innenschicht ist.

Nachteilig an dem bekannten Rohr ist, dass dieses hohen und schwankenden Luftdrücken ausgesetzt ist (> 25 bar) und insbesondere die Gefahr der Delamination von Schichten besteht. Der Erfindung liegt daher die Aufgabe zugrunde, ein besonders druckstabiles Rohr bereitzustellen, dessen Herstellungskosten gering sind und welches gleichzeitig auch bei dem genannten Drücken nicht zur Delamination neigt.

Diese Aufgabe wird gelöst durch ein Rohr, insbesondere zur Führung von Druckluft, umfassend eine Innenschicht eine innere Haftvermittlerschicht und eine Trägerschicht, wobei die innere Haftvermittlerschicht zwischen der Trägerschicht und der Innenschicht angeordnet ist, wobei die Trägerschicht ein PA6 umfasst, wobei die Innenschicht ein Polyamid aufweist, wobei die innere Haftvermittlerschicht ein erstes Polyamid aufweist, wobei die innere Haftvermittlerschicht ein zweites Polyamid umfasst, dadurch gekennzeichnet, dass das erste Polyamid der inneren Haftvermittlerschicht ein PA12 ist.

Der Erfindung liegt die Erkenntnis zugrunde, dass PA6 ein sehr druckbeständiger und gleichzeitig günstiger Kunststoff ist, so dass PA6 sich als Trägerschicht für Rohre von Druckluftleitungen sehr gut eignet. Allerdings ist PA6 weniger chemisch stabil als etwa PA12, so dass PA12 sich als Innen- und/oder Außenschicht relativ zu PA6 eignet. Da PA6 nur unzureichend an PA12 haftet wird in US 2009/0065085 A1 auf eine innere und eine äußere Haftvermittlerschicht zurückgegriffen.

Es wurde gefunden, dass die die unter hohen Drücken stehenden Luftbremsleitungen aufgrund der ständigen Druckschwankungen - über die Lebensdauer eines Fahrzeugs hinweg gesehen - ganz außergewöhnliche Anforderungen an die Rohre der Luftbremsleitungen stellen. Es ist eine Erkenntnis der Erfindung, dass die Rohre des Stands der Technik hinsichtlich einer dauerhaften Druckbeständigkeit unter automobilen Rahmenbedingungen (sehr niedrige, aber auch sehr hohe Temperaturen möglich, außerdem erhebliche chemische Belastung durch Salze, Öle, Kraftstoffe, etc.) noch verbesserungswürdig sind. Insbesondere kann nach einigen Jahren aufgrund von Materialalterung, ständigen Druckschwankungen im Rohr und Vibrationen im Fahrzeug eine Delamination zwischen der Innen- oder Außenschicht einerseits und der jeweiligen Haftvermittlerschicht andererseits auftreten.

Der Erfindung liegt insbesondere die Erkenntnis zugrunde, dass dieser aufgefundenen Delamination entgegen gewirkt wird, indem PA12 der inneren Haftvermittlerschicht beigefügt wird. Es wurde gefunden, dass PA12 in der inneren Haftvermittlerschicht für eine ausgezeichnete Haftung mit der Innenschicht verantwortlich ist, wenn die Innenschicht ein PA12, ein PA11 und/oder ein PA6.12 umfasst. Dies ist insofern überraschend, als dass im Stand der Technik PA6.12 als Hauptbestandteil in der Haftvermittlerschicht vorgesehen ist und PA6.12 aufgrund des 12er Monomers durchaus gut an PA12-, PA11- und PA6.12-Innenschichten haftet. Das Vorsehen von PA12 in der inneren Haftvermittlerschicht verbessert allerdings die Adhäsion noch weiter.

Schließlich wurde gefunden, dass die innere Haftvermittlerschicht grundsätzlich auch durch ein entsprechendes Additiv zur Steigerung der Adhäsionswirkung ausreichend adhäsiv gestaltet werden könnte. Derartige Additive müssen jedoch speziell auf die Haftvermittlersicht und die umgebenden Schichten abgestimmt werden, was ein aufwendiger und entsprechend kostspieliger Vorgang ist. Aufgrund der geringen Schichtdicke der inneren Haftvermittlerschicht ist dieses Vorgehen bzw. diese schichtindividuelle Zusammensetzung nicht wirtschaftlich, weswegen diese Variante ausscheidet. Deutlich wirtschaftlicher ist die Mischung zweier Polyamide, wie dies die Erfindung vorschlägt. Im Ergebnis wurde die eingangs genannte Aufgabe gelöst.

Die Innenschicht ist vorzugsweise die innerste Schicht des Rohrs und in Kontakt mit dem von dem Rohr transportierten Medium. Zweckmäßigerweise definiert die Innenschicht ein Lumen des Rohrs. Die Innenschicht und/oder die innere Haftvermittlerschicht und/oder die Trägerschicht und/oder die äußere Haftvermittlerschicht und/oder die Außenschicht ist/sind vorzugsweise (jeweils) einstückig und insbesondere homogen ausgebildet.

Der Begriff "homogen" meint vorzugsweise, dass eine Schicht aus lediglich einer Schmelze stammt bzw. aus lediglich einer Extruderdüse extrudiert wurde. Der Begriff "homogen" meint vorzugsweise, dass die Zusammensetzung des homogenen Körpers an an allen Stellen gleich bzw. im Wesentlichen gleich ist. Zwischen zwei (homogenen) Schichten ist vorzugsweise eine Grenzfläche befindlich. Das Rohr ist vorzugsweise einstückig ausgebildet und insbesondere aus einer Mehrzahl an homogenen Schichten zusammengesetzt. Der Begriff "einstückig" meint vorzugsweise, dass die Einstückigkeit lediglich auf irreversible bzw. zerstörerische Weise in eine Mehrstückigkeit überführt werden kann.

Gemäß einer besonders bevorzugten Ausführungsform ist das zweite Polyamid der inneren Haftvermittlerschicht ein PA6.12, wobei der Gewichtsanteil des zweiten Polyamids bzw. des PA6.12 an der inneren Haftvermittlerschicht geringer als 70 bzw. 60 bzw. 50 bzw. 40 bzw. 30 bzw. 20 % ist. Dies bewirkt einen ausreichend hohen Anteil von PA12 an der inneren Haftvermittlerschicht, wodurch eine besonders gute Anbindung an die Innenschicht erreicht wird. Mit Vorteil beläuft sich der Gewichtsanteil des PA6.12 an der inneren Haftvermittlerschicht auf wenigstens 10 bzw. 20 bzw. 30 Gew.-%.

Vorzugsweise beläuft sich der Gewichtsanteil des ersten Polyamids bzw. des PA12 an der inneren Haftvermittlerschicht auf wenigstens 30 bzw. 40 bzw. 50 bzw. 60 bzw. 70 bzw. 80 %. Mit Vorteil beläuft sich der Gewichtsanteil des ersten Polyamids bzw. des PA12 an der inneren Haftvermittlerschicht auf höchstens 90 bzw. 80 bzw. 70 bzw. 60 bzw. 50 bzw. 40 bzw. 30 %.

Es ist sehr bevorzugt, dass die Innenschicht ein aliphatisches Polyamid, vorzugsweise ein aliphatisches Polyamid mit mehr als 6 bzw. 9 Kohlenstoffatomen je Wiederholeinheit umfasst. Die Innenschicht weist mit Vorteil ein PA12, und/oder PA11 und/oder ein PA6.12 und/oder PA10.10 und/oder PA10.12 und/oder PA6.10 auf. Hierdurch wird die Trägerschicht chemisch von dem Lumen bzw. von dem Medium des Rohrs abgeschirmt. Insbesondere können Öle oder die Luftfeuchtigkeit im Lumen die Trägerschicht bzw. das PA6 in der Trägerschicht negativ beeinflussen, wovor die Innenschicht die Trägerschicht schützt. Die Innenschicht kann einen Weichmacher und/oder einen Schlagzähmodifikator umfassen. Es ist sehr bevorzugt, dass ein Polyamid-Anteil bzw. ein Anteil des aliphatischen Polyamids bzw. aliphatischer Polyamide bzw. ein Anteil umfassend PA12 und/oder PA11 und/oder PA6.12 und/oder PA10.10 und/oder PA10.12 und/oder PA6.10 sich auf wenigstens 20 bzw. 30 bzw. 40 bzw. 50 bzw. 60 bzw. 70 bzw. 80 Gew.-% der Innenschicht beläuft. Mit Vorteil beläuft sich ein Polyamid-Anteil bzw. ein Anteil des aliphatischen Polyamids bzw. aliphatischer Polyamide bzw. ein Anteil umfassend PA12 und/oder PA11 und/oder PA6.12 und/oder PA10.10 und/oder PA10.12 und/oder PA6.10 auf höchstens 99 bzw. 97 bzw. 95 Gew.-% der Innenschicht.

Gemäß einer sehr bevorzugten Ausführungsform ist die Trägerschicht wenigstens 0,6 bzw. 0,7 bzw. 0,8 mm dick. Hierdurch wird eine hohe Druckfestigkeit des Rohrs erzielt. Dies führt außerdem dazu, dass die Trägerschicht innerhalb des Rohrs eine mechanisch dominante Funktion einnimmt. Vorzugsweise beläuft sich eine Schichtdicke der Trägerschicht auf höchstens 3,0 bzw. 2,5 bzw. 2,0 mm. Es ist sehr bevorzugt, dass sich ein Verhältnis aus einer Dicke der Trägerschicht zu der Wandstärke des Rohrs auf wenigstens 0,4 bzw. 0,5 bzw. 0,6 bzw. 0,7 beläuft. Es ist vorteilhaft, dass sich ein Verhältnis aus einer Dicke der Trägerschicht zu der Wandstärke des Rohrs auf höchstens 0,95 bzw. 0,9 bzw. 0,85 bzw. 0,8 beläuft.

Mit Vorteil weist die Trägerschicht einen Polyamid-Anteil bzw. einen PA6-Anteil von wenigstens 20 bzw. 30 bzw. 40 bzw. 50 bzw. 60 bzw. 70 bzw. 80 bzw. 90 Gew.-% auf. Bevorzugt weist die Trägerschicht einen Polyamid-Anteil bzw. einen PA6-Anteil von höchstens 99 bzw. 97 bzw. 95 Gew.-% auf.

Zweckmäßigerweise liegt die innere Haftvermittlerschicht an der Innenschicht und/oder an der Trägerschicht an. Dies bewirkt eine gute Adhäsion. Außerdem wird erreicht, dass das Rohr eine möglichst geringe Anzahl an Schichten aufweist. Es ist sehr bevorzugt, dass sich eine Schichtdicke der inneren Haftvermittlerschicht auf höchstens 0,30 bzw. 0,25 bzw. 0,20 bzw. 0,15 bzw. 0,10 bzw. 0,08 mm beläuft. Zweckmäßigerweise umschließt die innere Haftvermittlerschicht die Innenschicht. Vorzugsweise umschließt die Trägerschicht die innere Haftvermittlerschicht.

Vorzugsweise umfasst das Rohr eine Außenschicht, wobei die Außenschicht mit Vorteil ein aliphatisches Polyamid, vorzugsweise ein aliphatisches Polyamid mit mehr als 6 bzw. 9 Kohlenstoffatomen je Wiederholeinheit umfasst. Die Außenschicht weist mit Vorteil ein PA12 und/oder PA11 und/oder PA6.12 und/oder PA10.10 und/oder PA10.12 und/oder PA6.10 auf. Hierdurch wird die Trägerschicht vor Umwelteinflüssen, insbesondere vor Wasser, Salzen, Ölen, Kraftstoffen und dergleichen geschützt. Es ist möglich, dass die Außenschicht einen Weichmacher und/oder einen Schlagzähmodifikator umfasst. Mit Vorteil beläuft sich ein Polyamid-Anteil bzw. ein Anteil des aliphatischen Polyamids bzw. aliphatischer Polyamide bzw. ein Anteil umfassend ein PA12 und/oder PA11 und/oder PA6.12 und/oder PA10.10 und/oder PA10.12 und/oder PA6.10 auf wenigstens 20 bzw. 30 bzw. 40 bzw. 50 bzw. 60 bzw. 70 bzw. 80 Gew.-% der Außenschicht. Mit Vorteil beläuft sich ein Polyamid-Anteil bzw. ein Anteil des aliphatischen Polyamids bzw. aliphatischer Polyamide bzw. ein Anteil umfassend ein PA12 und/oder PA11 und/oder PA6.12 und/oder PA10.10 und/oder PA10.12 und/oder PA6.10 auf höchstens 99 bzw. 97 bzw. 95 Gew.-% der Außenschicht.

Bevorzugt umfasst das Rohr eine äußere Haftvermittlerschicht. Dies bewirkt eine gute Adhäsion zwischen der Trägerschicht und der Außenschicht. Zweckmäßigerweise ist die äußere Haftvermittlerschicht zwischen der Außenschicht und der Trägerschicht angeordnet. Mit Vorteil liegt die äußere Haftvermittlerschicht an der Trägerschicht und/oder an der Außenschicht an. Zweckmäßigerweise umschließt die äußere Haftvermittlerschicht die Trägerschicht. Vorzugsweise umschließt die Außenschicht die äußere Haftvermittlerschicht. Es ist sehr bevorzugt, dass sich eine Schichtdicke der äußeren Haftvermittlerschicht auf höchstens 0,30 bzw.0,25 bzw. 0,20 bzw. 0,15 bzw. 0,10 bzw. 0,08 mm beläuft. Vorzugsweise umfasst die äußere Haftvermittlerschicht ein erstes Polyamid. Mit Vorteil weist die äußere Haftvermittlerschicht ein zweites Polyamid auf.

Es ist sehr bevorzugt, dass das erste Polyamid der äußeren Haftvermittlerschicht ein PA12 ist. Vorzugsweise beläuft sich der Gewichtsanteil des ersten Polyamids bzw. des PA12 an der äußeren Haftvermittlerschicht auf wenigstens 30 bzw. 40 bzw. 50 bzw. 60 bzw. 70 bzw. 80 %. Bevorzugt beläuft sich der Gewichtsanteil des ersten Polyamids bzw. des PA12 an der äußeren Haftvermittlerschicht auf höchstens 90 bzw. 80 bzw. 70 bzw. 60 bzw. 50 bzw. 40 bzw. 30 %.

Gemäß einer besonders bevorzugten Ausführungsform ist das zweite Polyamid der äußeren Haftvermittlerschicht ein PA6.12, wobei der Gewichtsanteil des zweiten Polyamids bzw. des PA 6.12 an der äußeren Haftvermittlerschicht geringer als 60 bzw. 50 bzw. 40 % ist. Mit Vorteil beläuft sich der Gewichtsanteil des zweiten Polyamids bzw. des PA6.12 an der äußeren Haftvermittlerschicht auf wenigstens 10 bzw. 20 bzw. 30 Gew.-%. Dies bewirkt einen relativ hohen Anteil von PA12 an der äußeren Haftvermittlerschicht, wodurch eine besonders gute Anbindung an die Außenschicht erreicht wird.

Vorzugsweise beläuft sich eine Wandstärke des Rohres auf wenigstens 0,8 bzw. 0,9 bzw. 1,0 mm. Dies ermöglicht eine hohe Druckfestigkeit. Vorzugsweise beläuft sich eine Wandstärke des Rohres auf höchstens 3,5 bzw. 3,0 bzw. 2,5 mm.

Mit Vorteil weist die Innenschicht und/oder die Außenschicht eine Schichtdicke von höchstens 0,40 bzw. 0,30 bzw. 0,20 bzw. 0,15 mm auf. Dies bewirkt, dass die Trägerschicht die mechanisch dominante Schicht innerhalb des Rohres ist, sodass die Innenschicht und/oder die Außenschicht im Wesentlichen auf die chemische Funktion beschränkt ist/sind. Die Innenschicht und/oder die Außenschicht weist/weisen mit Vorteil eine Schichtdicke von wenigstens 0,05 bzw. 0,07 bzw. 0,09 mm auf.

Die eingangs genannte Aufgabe wird gelöst durch eine Verwendung eines erfindungsgemäßen Rohrs als Rohr zur Führung von Druckluft, vorzugsweise innerhalb eines Fahrzeugs, insbesondere als Rohr einer Luftbremsleitung.

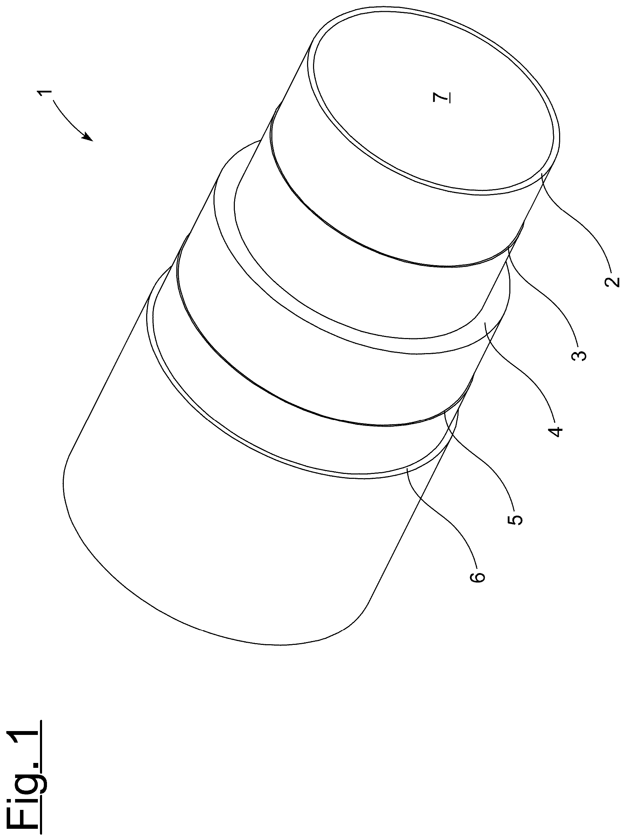

Nachfolgend wird die Erfindung anhand eines Ausführungsbeispiels mithilfe einer Figur erläutert. Es zeigt
- Fig. 1: eine perspektivische Ansicht eines erfindungsgemäßen Rohrs für eine Luftbremsleitung.

In Fig. 1 ist ein Rohr 1 für eine Luftbremsleitung eines Fahrzeugs perspektivisch abgebildet. Die einzelnen Schichten 2-6 sind dabei stufig gezeichnet, was jedoch lediglich der besseren Anschaulichkeit geschuldet ist. Das Rohr 1 des Ausführungsbeispiels muss schwankenden Drücken oberhalb von 25 bar widerstehen und ist für Automobilverhältnisse konstruiert, sodass es für eine entsprechend lange Lebensdauer und für entsprechende Witterungen ausgelegt ist.

Das Rohr 1 des Ausführungsbeispiels umfasst vorzugsweise fünf Schichten. Das Rohr 1 weist eine Innenschicht 2 auf, welche ein Lumen 7 des Rohrs 1 begrenzt, so dass die Innenschicht 1 mit dem Medium innerhalb des Rohrs 1 in Berührung kommt. Bei dem Medium handelt es sich um Druckluft mit einer witterungsbedingt schwankenden Luftfeuchtigkeit, wobei sich unter die Druckluft auch - in geringem Umfang - Verschmutzungsbestandteile mischen können. Hierbei kann es sich insbesondere um Stoffe wie Öle und dergleichen handeln, die innerhalb eines pneumatischen Wirkkreises zum Einsatz kommen können.

Das Rohr 1 umfasst eine innere Haftvermittlerschicht 3 und eine Trägerschicht 4. Die innere Haftvermittlerschicht 3 ist zwischen der Innenschicht 2 und der Trägerschicht 4 angeordnet, so dass die Trägerschicht die innere Haftvermittlerschicht 3 umschließt. Das Rohr 1 umfasst vorzugsweise eine Außenschicht 6 und bevorzugt eine äußere Haftvermittlerschicht 5. Die äußere Haftvermittlerschicht 5 ist vorzugsweise zwischen der Trägerschicht 4 und der Außenschicht 6 angeordnet.

Die Trägerschicht 4 umfasst zweckmäßigerweise ein Polyamid und vorzugsweise ein PA6. Der Gewichtsanteil des Polyamid bzw. PA6 an der Trägerschicht 4 beläuft sich vorzugsweise auf wenigstens 50 bzw. 60 bzw. 70 Gew.-%. Die Trägerschicht 4 kann wenigstens ein Additiv, beispielsweise ein Additiv zur Erhöhung der Schlagzähigkeit (Schlagzähmodifikator), aufweisen.

Es ist sehr bevorzugt, dass die Trägerschicht 4 eine Dicke von wenigstens 0,8 bzw. 1,0 mm aufweist. In diesem Ausführungsbeispiel beläuft sich ein Verhältnis aus einer Schichtdicke der Trägerschicht 4 relativ zu einer der Wandstärke des Rohres 1 auf wenigstens 0,6 bzw. 0,7. Die Trägerschicht 4 ist in diesem Ausführungsbeispiel die mechanisch dominante Schicht des Rohrs 1.

Die Innenschicht 2 dieses Ausführungsbeispiels kann ein PA12 und/oder ein PA11 und/oder ein PA6.12 aufweisen. Besonders vorzugsweise umfasst die Innenschicht 2 lediglich ein Polyamid, nämlich PA12. Es ist sehr bevorzugt, dass ein Polyamid-Anteil an der Innenschicht 2 sich auf wenigstens 60 bzw. 70 Gew.-% beläuft. Mit Vorteil umfasst die Innenschicht 2 einen Weichmacher und/oder einen Schlagzähmodifikator. Eine Schichtdicke der Innenschicht 2 beläuft sich mit Vorteil auf höchstens 0,2 bzw. 0,15 mm.

Die innere Haftvermittlerschicht 3 weist ein PA12 und vorzugsweise ein PA6.12 auf. Es ist sehr bevorzugt, dass der Anteil von PA12 an der inneren Haftvermittlerschicht 3 sich auf wenigstens 50 bzw. 60 Gew.-% beläuft. Der Anteil von PA 6.12 an der inneren Haftvermittlerschicht 3 beläuft sich vorzugsweise auf höchstens 50 bzw. 40 Gew.-%. Es ist sehr bevorzugt, dass die innere Haftvermittlerschicht 3 eine Schichtdicke von höchstens 0,15 bzw. 0,12 bzw. 0,10 bzw. 0,08 mm aufweist.

Die Außenschicht 6 dieses Ausführungsbeispiels kann ein PA12 und/oder ein PA11 und/oder ein PA6.12 aufweisen. Besonders vorzugsweise umfasst die Außenschicht 6 lediglich ein Polyamid, nämlich PA12. Es ist sehr bevorzugt, dass der Polyamid-Anteil der Außenschicht 6 sich auf wenigstens 60 bzw. 70 Gew.-% beläuft. Mit Vorteil umfasst die Außenschicht 6 einen Weichmacher und/oder einen Schlagzähmodifikator. Eine Schichtdicke der Außenschicht 6 beläuft sich mit Vorteil auf höchstens 0,2 bzw. 0,15 mm.

Die äußere Haftvermittlerschicht 5 weist ein PA12 und vorzugsweise ein PA6.12 auf. Es ist sehr bevorzugt, dass der Anteil von PA12 an der äußeren Haftvermittlerschicht 5 sich auf wenigstens 50 bzw. 60 Gew.-% beläuft. Der Anteil von PA6.12 an der äußeren Haftvermittlerschicht 5 beläuft sich vorzugsweise auf höchstens 50 bzw. 40 Gew.-%. Es ist sehr bevorzugt, dass die äußere Haftvermittlerschicht 5 eine Schichtdicke von höchstens 0,15 bzw. 0,12 bzw. 0,10 bzw. 0,08 mm aufweist.

### Bezugszeichenliste

- 1: Rohr
- 2: Innenschicht
- 3: Innere Haftvermittlerschicht
- 4: Trägerschicht
- 5: Äußere Haftvermittlerschicht
- 6: Außenschicht
- 7: Lumen

## Patentansprüche

1. Rohr (1), insbesondere zur Führung von Druckluft, umfassend eine Innenschicht (2) eine innere Haftvermittlerschicht (3) und eine Trägerschicht (4), wobei die innere Haftvermittlerschicht (3) zwischen der Trägerschicht (4) und der Innenschicht (2) angeordnet ist, wobei die Trägerschicht (4) ein PA6 umfasst, wobei die Innenschicht (2) ein Polyamid aufweist, wobei die innere Haftvermittlerschicht (3) ein erstes Polyamid aufweist, wobei die innere Haftvermittlerschicht (3) ein zweites Polyamid umfasst,
**dadurch gekennzeichnet, dass**
das erste Polyamid der inneren Haftvermittlerschicht (3) ein PA12 ist.

2. Rohr (1) nach Anspruch 1, wobei das zweite Polyamid der inneren Haftvermittlerschicht (3) ein PA6.12 ist, wobei der Gewichtsanteil des PA6.12 an der inneren Haftvermittlerschicht (3) geringer als 60% bzw. 50% bzw. 40% ist.

3. Rohr (1) nach Anspruch 1 oder 2, wobei die Innenschicht (2) ein aliphatisches Polyamid, vorzugsweise ein aliphatisches Polyamid mit mehr als 6 bzw. 9 Kohlenstoffatomen je Wiederholeinheit, weiter vorzugsweise ein PA12, und/oder PA11 und/oder PA6.12 und/oder PA10.10 und/oder PA10.12 und/oder PA6.10 umfasst.

4. Rohr (1) nach einem der Ansprüche 1 bis 3, wobei die Trägerschicht (4) wenigstens 0,6 bzw. 0,7 bzw. 0,8mm dick ist.

5. Rohr (1) nach einem der Ansprüche 1 bis 4, wobei die innere Haftvermittlerschicht (3) an der Innenschicht (2) und/oder an der Trägerschicht (4) anliegt.

6. Rohr (1) nach einem der Ansprüche 1 bis 5, wobei das Rohr (1) eine Außenschicht (6) umfasst, wobei die Außenschicht (6) vorzugsweise ein aliphatisches Polyamid, vorzugsweise ein aliphatisches Polyamid mit mehr als 6 bzw. 9 Kohlenstoffatomen je Wiederholeinheit, weiter vorzugsweise ein PA12, und/oder PA11 und/oder PA6.12 und/oder PA10.10 und/oder PA10.12 und/oder PA6.10 umfasst.

7. Rohr (1) nach einem der Ansprüche 1 bis 6, wobei das Rohr (1) eine äußere Haftvermittlerschicht (5) aufweist.

8. Rohr (1) nach einem der Ansprüche 1 bis 7, wobei sich eine Wandstärke des Rohres (1) auf wenigstens 0,8 bzw. 0,9 bzw. 1,0mm beläuft.

9. Rohr (1) nach einem der Ansprüche 1 bis 8, wobei die Innenschicht (2) und/oder die Außenschicht (5) eine Schichtdicke von höchstens 0,4 bzw. 0,3 bzw. 0,2mm aufweist.

10. Verwendung eines Rohrs (1) nach einem der Ansprüche 1 bis 9 als Rohr zur Führung von Druckluft, vorzugsweise innerhalb eines Fahrzeugs, insbesondere als Rohr einer Luftbremsleitung.
